(19) Europäisches Patentamt / European Patent Office / Office européen des brevets

(11) **EP 4 746 270 A1**

(12) **DEMANDE DE BREVET EUROPEEN**

(43) Date de publication:
**20.05.2026 Bulletin 2026/21**

(21) Numéro de dépôt: **25216659.0**

(22) Date de dépôt: **18.11.2025**

(51) Classification Internationale des Brevets (IPC):
**H02M 1/00** *(2006.01)*   **H02M 3/158** *(2006.01)*
**H02M 3/06** *(2006.01)*

(52) Classification Coopérative des Brevets (CPC):
**H02M 1/0054; H02M 1/0025; H02M 1/0095;**
**H02M 3/06; H02M 3/158;** H02M 7/4837

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **18.11.2024 FR 2412565**

(71) Demandeur: **Commissariat à l'Energie Atomique et aux Energies Alternatives**
**75015 Paris (FR)**

(72) Inventeurs:
• **BERTIN RIVIERE DE LA SOUCHERE, Thibault**
**38054 GRENOBLE Cedex 9 (FR)**
• **CARCOUET, Sébastien**
**38054 GRENOBLE Cedex 9 (FR)**
• **MAYNARD, Xavier**
**38054 GRENOBLE Cedex 9 (FR)**

(74) Mandataire: **Germain Maureau**
**12, rue Boileau**
**69006 Lyon (FR)**

(54) **PROCÉDÉ, DISPOSITIF DE COMMANDE ET CONVERTISSEUR FLYING CAPACITOR EN MODE DE CONDUCTION DISCONTINUE**

(57) L'invention concerne un procédé de commande d'un convertisseur multi-niveau à capacité flottante, le procédé comprenant les étapes suivantes :
- Détermination d'un signal de commande primaire ($G_{1P}$) correspondant à signal de commande en mode de conduction continu du convertisseur pour au moins un interrupteur commandé du convertisseur;
- Détermination d'un signal de commande secondaire ($G_{1CDM}$) déterminé de façon à changer de valeur en lien avec le passage à zéro du courant dans l'au moins un interrupteur commandé;
- Combinaison entre le signal de commande primaire ($G_{1P}$) et le signal de commande secondaire ($G_{1CDM}$) de façon à obtenir un signal de commande composite ($G_{1C}$);
- Commande de l'au moins un interrupteur commandé sur la base du signal de commande composite ($G_{1C}$).

L'invention concerne également un dispositif de commande pour un convertisseur et un convertisseur.

FIG. 9

EP 4 746 270 A1

## EP 4 746 270 A1

**Description**

**Domaine technique de l'invention**

L'invention concerne le domaine technique de l'électronique de puissance, et en particulier les convertisseurs multi-niveaux. L'utilisation de topologies multi-niveaux présente l'avantage de réduire la taille des filtres de sortie, de réduire les contraintes physiques en utilisant des composants basse tension. Le pilotage d'un convertisseur multi-niveaux est, cependant, plus complexe notamment au vu du nombre plus important de variables à prendre en compte et du nombre de transistors à piloter. En particulier, cette invention concerne le contrôle d'un convertisseur type à capacité flottante (« Flying-Capacitor » en anglais) à 3 niveaux élévateur ou abaisseur de tension (« Buck » ou « Boost » en anglais) en mode de conduction discontinue, c'est-à-dire quand le courant dans une inductance d'entrée passe par 0.

**Etat de la technique**

Des méthodes de pilotage d'un convertisseur à capacité flottante en mode de conduction discontinue existent. Cependant, les méthodes proposées se basent généralement sur l'ajout de signaux de commande complexes à mettre en oeuvre ou sur l'ajout de capteurs.

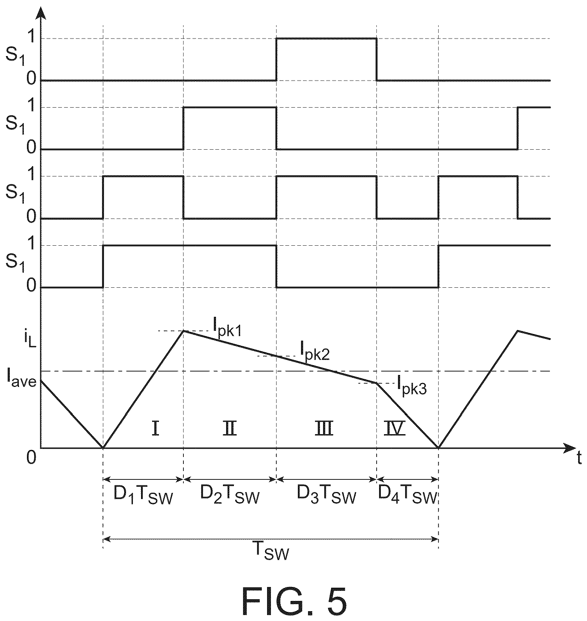

En particulier, La Figure 5 présente l'abstract d'un article de 2018 intitulé « *Control Method of Flying Capacitor Converter Operated in Discontinuous Current Mode and Critical Current Mode* » par Itoh et al. Cet article présente une méthode de contrôle d'un convertisseur à capacité flottante en mode élévateur de tension. Sur la Figure 5, les signaux de commandes ($S_1$, $S_2$, $S_3$ et $S_4$) du convertisseur sont également présentés.

Les formes d'ondes de ces signaux sont basées sur une modélisation mathématique du courant dans l'inductance d'entrée du convertisseur. L'objectif est de maintenir en permanence le courant en mode de conduction critique. Pour cela, les transistors commutent à des fréquences différentes :

$S_1$ commute à la fréquence $f_{sw}$
$S_2$ commute à la fréquence $2{*}f_{sw}$
$S_3$ commute à la fréquence $3{*}f_{sw}$
$S_4$ commute à la fréquence $4{*}f_{sw}$

Ainsi, les pertes dans le transistor $S_3$ vont être bien supérieures aux autres. De plus, la génération du signal $S_3$ implique de pouvoir changer la phase et le rapport cyclique du signal en temps réel. La génération de ces signaux est donc coûteuse en ressources pour un microcontrôleur standard. De plus, le courant dans l'inductance est à la fréquence $f_{sw}$. Dans un mode de fonctionnement normal du convertisseur, la fréquence du courant est $2{*}f_{sw}$ avec des transistors commutant tous à la fréquence $f_{sw}$. Ainsi, cette méthode implique de surdimensionner l'inductance d'un facteur 2 afin de garantir un niveau d'ondulation $\mathit{\Delta}I$ du courant d'entrée $I_L$.

Les méthodes de contrôle des convertisseurs type Flying Capacitor en mode de conduction discontinue sont basées sur une génération de signaux complexes, uniquement faisables avec un FPGA. Les coûts en ressources et en développement sont donc importants. De plus, dans certaines méthodes, les différences de fréquences de commutations entre les transistors provoquent des disparités des pertes entre ces derniers. Par ailleurs, la fréquence apparente du courant dans l'inductance est réduite et cela impose de surdimensionner ladite inductance.

La présente invention a pour objet de résoudre tout ou partie des inconvénients mentionnés ci-dessus.

**Exposé de l'invention**

A cet effet, la présente invention concerne un procédé de commande d'un convertisseur multi-niveau à capacité flottante, le convertisseur comprenant une inductance d'entrée, une première paire d'interrupteurs commandés et une deuxième paire d'interrupteurs commandés, les interrupteurs commandés de la première paire d'interrupteurs commandés étant disposés autour des interrupteurs commandés de la deuxième paires d'interrupteurs commandés, la capacité flottante étant connectée d'une part à un premier point disposé entre un premier interrupteur commandé de la première paire d'interrupteurs commandés et un premier interrupteur commandé de la deuxième paire d'interrupteurs commandés et d'autre part à un deuxième point disposé entre un deuxième interrupteur commandé de la première paire d'interrupteurs commandés et un deuxième interrupteur commandé de la deuxième paire d'interrupteurs commandés, le convertisseur comprenant en outre un dispositif de commande configuré pour commander au moins un des interrupteurs commandés et pour mettre en oeuvre le procédé de commande en mode de conduction discontinu du convertisseur, le procédé comprenant les étapes suivantes :

- Détermination d'un signal de commande primaire correspondant à signal de commande en mode de conduction continu du convertisseur pour l'au moins un interrupteur commandé;

- Détermination d'un signal de commande secondaire déterminé de façon à changer de valeur en lien avec le passage à zéro du courant dans l'au moins un interrupteur commandé ;
- Combinaison entre le signal de commande primaire et le signal de commande secondaire de façon à obtenir un signal de commande composite ;
- Commande de l'au moins un interrupteur commandé sur la base du signal de commande composite,

dans lequel le signal de commande secondaire est déterminé en fonction du point de fonctionnement du convertisseur, d'une valeur de l'inductance d'entrée et de la fréquence de commutation.

Grâce à ces dispositions, un procédé de commande d'un convertisseur multi-niveau à capacité flottante est proposé qui est basé sur la génération de signaux simples à mettre en œuvre tout en conservant la fréquence apparente du courant. Ce procédé peut être mis en œuvre sans avoir recours à des capteurs supplémentaires.

Le procédé peut être mis en œuvre en mode élévateur de tension (Boost) ou abaisser de tension (Buck). Le procédé peut être mis en œuvre en mode de régulation du courant d'entrée ou de la tension de sortie, avec une source de tension ou une charge en sortie.

Le signal de commande composite représente le signal de commande ou signal de grille que l'on souhaite appliquer sur l'interrupteur commandé afin de conduire lorsque le courant est positif et d'ouvrir ce dernier lorsque le courant passe par 0.

Selon une possibilité, l'inductance d'entrée peut être connectée entre les interrupteurs commandés de la deuxième paire d'interrupteurs commandés.

Par point de fonctionnement, on peut entendre une valeur d'intensité d'entrée associé à une valeur de tension d'entrée et une valeur de tension de sortie.

Selon un mode de réalisation, seule la commande d'un interrupteur commandé par paire d'interrupteurs commandés est modifiée par rapport au mode de conduction continu et donne lieu à la détermination d'un signal de commande secondaire.

Selon un mode de réalisation, la combinaison réalisée entre le signal de commande primaire et le signal de commande secondaire est une opération logique ET.

Selon un mode de réalisation, le signal de commande secondaire est référencé par rapport au signal de commande primaire et présente un déphasage par rapport audit signal de commande primaire ou par rapport à une valeur de porteuse dudit signal de commande primaire.

Selon un mode de réalisation, le signal secondaire présente une fréquence double, égale à $2*f_{sw}$ par rapport à la fréquence $f_{sw}$ du signal $G_{1P}$.

Selon un mode de réalisation, le déphasage du signal du commande secondaire par rapport au signal de commande primaire ou par rapport à une valeur de porteuse dudit signal de commande primaire est déterminé en fonction de la période du signal de commande primaire, de la valeur moyenne de l'intensité en entrée, de la tension d'entrée et de la tension de sortie, de l'impédance d'entrée et d'une tension de référence.

Selon un mode de réalisation, le déphasage est déterminé en mode élévateur de tension en prenant en compte la formule suivante :

$$\Phi_{DCM} = V_{ref} * \frac{T_{sw}}{2} + I_{Lripple} * \frac{L_{in}}{V_{out} - V_{in}}$$

Dans laquelle :

$\Phi_{DCM}$ est le déphasage du signal du commande secondaire par rapport au signal de commande primaire ou par rapport à une valeur de porteuse dudit signal de commande primaire ;
$T_{sw}$ est la période du signal de commande primaire ;
$V_{in}$ est la valeur instantanée de la tension d'entrée ;
$V_{out}$ est la valeur instantanée de la tension de sortie ;
$L_{in}$ est la valeur de l'impédance d'entrée ;
$V_{ref}$ est la valeur de la tension de référence ;
$I_{Lripple}$ étant défini par la formule :

$$I_{Lripple} = \sqrt{\frac{I_{mean}. T_{sw}. (V_{out} - V_{in}). (2V_{in} - V_{out})}{V_{out}. L_{in}}}$$

3

Dans laquelle en outre :
$I_{mean}$ est la valeur moyenne de l'intensité en entrée.

Selon un mode de réalisation, les valeurs instantanées d'entrée et de sortie sont respectivement mesurées par des capteurs. Le procédé permet de s'adapter aux variations de ces valeurs instantanées d'entrée et de sortie pour maintenir un mode de fonctionnement dans lequel le courant est en conduction discontinue. A titre d'exemple, le capteur de mesure peut être un convertisseur analogique numérique (ou ADC).

Selon un mode de réalisation, le déphasage du signal du commande secondaire par rapport au signal de commande primaire ou par rapport à une valeur de porteuse dudit signal de commande primaire en mode abaisseur de tension est déterminé en fonction de la période du signal de commande primaire, et d'une tension de référence.

Selon un mode de réalisation, le déphasage est déterminé en mode abaisseur de tension en prenant en compte la formule suivante :

$$\Phi_{DCM} = \left(1 - V_{ref}\right) * \frac{T_{sw}}{2}$$

Dans laquelle :

$\Phi_{DCM}$ est le déphasage du signal du commande secondaire par rapport au signal de commande primaire ;
$T_{sw}$ est la période du signal de commande primaire ;
$V_{ref}$ est la valeur de la tension de référence ;
Selon un mode de réalisation, le signal de commande secondaire présente un rapport cyclique déterminé en fonction de la période du signal de commande primaire, de la valeur moyenne de l'intensité en entrée, de la tension d'entrée et de la tension de sortie, et de l'impédance d'entrée.

Le rapport cyclique correspond au rapport entre le temps passé en conduction (courant positif) et la demi-période de commutation $T_{sw}/2$.

Selon un mode de réalisation, le rapport cyclique est déterminé en mode élévateur de tension en utilisant la formule :

$$\alpha_{DCM} = 1 - \frac{2}{T_{sw}} * I_{L_{ripple}} * \left(\frac{L_{in}}{V_{out} - V_{in}} + \frac{L_{in}}{V_{in} - 0.5 * V_{out}}\right)$$

Dans laquelle :

$\alpha_{DCM}$ est le rapport cyclique du signal du commande secondaire ;
$T_{sw}$ est la période du signal de commande primaire ;
$V_{in}$ est la valeur de la tension d'entrée ;
$V_{out}$ est la valeur de la tension de sortie ;
$L_{in}$ est la valeur de l'impédance d'entrée ;
$I_{L_{ripple}}$ étant défini par la formule :

$$I_{L_{ripple}} = \sqrt{\frac{I_{mean}.T_{sw}.\left(V_{out} - V_{in}\right).\left(2V_{in} - V_{out}\right)}{V_{out}.L_{in}}}$$

Dans laquelle en outre :
$I_{mean}$ est la valeur moyenne de l'intensité en entrée.

Selon un mode de réalisation, le rapport cyclique est déterminé en mode abaisseur de tension en utilisant la formule :

$$\alpha_{DCM} = 1 - \frac{T_{sw}}{2} * I_{L_{ripple}} * \frac{L_{in}}{V_{in} - 0.5 * V_{out}}$$

Dans laquelle :

$\alpha_{DCM}$ est le rapport cyclique du signal du commande secondaire ;
$T_{sw}$ est la période du signal de commande primaire ;
$V_{in}$ est la valeur de la tension d'entrée ;
$V_{out}$ est la valeur de la tension de sortie ;
$L_{in}$ est la valeur de l'impédance d'entrée ;
$I_{Lripple}$ étant défini par la formule :

$$I_{L_{ripple}} = \sqrt{\frac{I_{mean} \cdot T_{sw} \cdot (V_{in} - V_{out}) \cdot (2V_{in} - V_{out})}{V_{out} \cdot L_{in}}}$$

Dans laquelle en outre :
$I_{mean}$ est la valeur moyenne de l'intensité en entrée.

Selon un mode de réalisation, dans lequel le signal de commande secondaire est déterminé en prenant en compte un paramètre d'erreur destiné à réaliser une ouverture de l'au moins un interrupteur commandé avant le passage à zéro du courant.

La prise en compte d'un paramètre d'erreur permet de stabiliser la régulation du système, sur toute la plage de puissance du convertisseur. Le paramètre d'erreur permet de prendre en compte l'incertitude sur la valeur de l'inductance d'entrée.

En effet, les modélisations présentées dans l'art antérieur ne prennent pas en compte les incertitudes sur la valeur de l'inductance. Cette dernière possédant une tolérance pouvant aller jusqu'à 20%, la modélisation mathématique du courant dans l'inductance peut s'avérer fausse et cela impacte la stabilité de la régulation du courant.

Selon un mode de réalisation, le déphasage est déterminé en mode élévateur de tension en prenant en compte la formule suivante :

$$\Phi_{DCM} = \left(V_{ref1} - \Delta_{error}\right) * \frac{T_{sw}}{2} + I_{Lripple} * \frac{L_{in}}{V_{out} - V_{in}}$$

Dans laquelle :

$\Phi_{DCM}$ est le déphasage du signal du commande secondaire par rapport au signal de commande primaire ou par rapport à une valeur de porteuse dudit signal de commande primaire ;
$T_{sw}$ est la période du signal de commande primaire ;
$V_{in}$ est la valeur instantanée de la tension d'entrée ;
$V_{out}$ est la valeur instantanée de la tension de sortie ;
$L_{in}$ est la valeur de l'impédance d'entrée ;
$V_{ref1}$ est la valeur de la tension de référence ;
$I_{Lripple}$ étant défini par la formule :

$$I_{L_{ripple}} = \sqrt{\frac{I_{mean} \cdot T_{sw} \cdot (V_{out} - V_{in}) \cdot (2V_{in} - V_{out})}{V_{out} \cdot L_{in}}}$$

Dans laquelle en outre :
$I_{mean}$ est la valeur moyenne de l'intensité en entrée.

Selon un mode de réalisation, le rapport cyclique est déterminé en mode élévateur de tension en prenant en compte la formule suivante :

$$\alpha_{DCM} = 1 - \frac{2}{T_{sw}} * I_{L_{ripple}} * \left(\frac{L_{in}}{V_{out} - V_{in}} + \frac{L_{in}}{V_{in} - 0.5 * V_{out}}\right) - 2 * \Delta_{error}$$

Dans laquelle :

$\alpha_{DCM}$ est le rapport cyclique du signal du commande secondaire ;

$T_{sw}$ est la période du signal de commande primaire ;
$V_{in}$ est la valeur instantanée de la tension d'entrée ;
$V_{out}$ est la valeur instantanée de la tension de sortie ;
$L_{in}$ est la valeur de l'impédance d'entrée ;
$I_{Lripple}$ étant défini par la formule :

$$I_{L_{ripple}} = \sqrt{\frac{I_{mean}.T_{sw}.(V_{out} - V_{in}).(2V_{in} - V_{out})}{V_{out}.L_{in}}}$$

Dans laquelle en outre :
$I_{mean}$ est la valeur moyenne de l'intensité en entrée.

Selon un mode de réalisation, la valeur du paramètre d'erreur est comprise en 0 et 10% de la période du signal de commande primaire, et de préférence entre 1 et 5%.

Selon un mode de réalisation, le déphasage est déterminé en mode abaisseur de tension en prenant en compte la formule suivante :

$$\Phi_{DCM} = \left(1 - V_{ref_1} + \Delta_{error}\right) * \frac{T_{sw}}{2}$$

Dans laquelle :

$\Phi_{DCM}$ est le déphasage du signal du commande secondaire par rapport au signal de commande primaire ou par rapport à une valeur de porteuse dudit signal de commande primaire ;
$T_{sw}$ est la période du signal de commande primaire ;
$V_{in}$ est la valeur instantanée de la tension d'entrée ;
$V_{out}$ est la valeur instantanée de la tension de sortie ;
$L_{in}$ est la valeur de l'impédance d'entrée ;
$V_{ref1}$ est la valeur de la tension de référence ;
$I_{Lripple}$ étant défini par la formule :

$$I_{L_{ripple}} = \sqrt{\frac{I_{mean}.T_{sw}.(V_{in} - V_{out}).(2V_{in} - V_{out})}{V_{out}.L_{in}}}$$

Dans laquelle en outre :
$I_{mean}$ est la valeur moyenne de l'intensité en entrée.

Selon un mode de réalisation, dans lequel le rapport cyclique est déterminé en mode abaisseur de tension en prenant en compte la formule suivante :

$$\alpha_{DCM} = 1 - \frac{T_{sw}}{2} * I_{L_{ripple}} * \frac{L_{in}}{V_{in} - 0.5 * V_{out}} - 2 * \Delta_{error}$$

Dans laquelle :

$\alpha_{DCM}$ est le rapport cyclique du signal du commande secondaire ;
$T_{sw}$ est la période du signal de commande primaire ;
$V_{in}$ est la valeur instantanée de la tension d'entrée ;
$V_{out}$ est la valeur instantanée de la tension de sortie ;
$L_{in}$ est la valeur de l'impédance d'entrée ;
$I_{Lripple}$ étant défini par la formule :

$$I_{L_{ripple}} = \sqrt{\frac{I_{mean} \cdot T_{sw} \cdot (V_{in} - V_{out}) \cdot (2V_{in} - V_{out})}{V_{out} \cdot L_{in}}}$$

Dans laquelle en outre :

$I_{mean}$ est la valeur moyenne de l'intensité en entrée.

Selon un mode de réalisation, la valeur du paramètre d'erreur est comprise en 0 et 10% de la période du signal de commande primaire, et de préférence entre 1 et 5%.

Selon un mode de réalisation, la détermination du signal de commande primaire est réalisée en utilisant une boucle de régulation d'une tension de sortie et/ou en fonction d'une tension aux bornes de la capacité flottante et d'une valeur de courant d'entrée ou de tension d'entrée de référence.

Selon un mode de réalisation, la boucle de régulation réalise une comparaison entre une valeur de tension d'entrée de référence et au moins une valeur de porteuse.

Selon un mode de mise en œuvre, la valeur de porteuse est une valeur présentant un évolution temporelle périodique de période fsw, en particulier une évolution triangulaire.

La présente invention concerne également un dispositif de commande pour un convertisseur multi-niveau à capacité flottante, le dispositif de commande étant agencé pour mettre en œuvre un procédé tel que défini précédemment.

La présente invention concerne également un convertisseur multi-niveau à capacité flottante, le convertisseur comprenant une première paire d'interrupteurs commandés et une deuxième paire d'interrupteurs commandés, les interrupteurs commandés de la première paire d'interrupteurs commandés étant disposés autour des interrupteurs commandés de la deuxième paires d'interrupteurs commandés, la capacité flottante étant connectée d'une part à un premier point disposé entre un premier interrupteur commandé de la première paire d'interrupteurs commandés et un premier interrupteur commandé de la deuxième paire d'interrupteurs commandés et d'autre part à un deuxième point disposé entre un deuxième interrupteur commandé de la première paire d'interrupteurs commandés et un deuxième interrupteur commandé de la deuxième paire d'interrupteurs commandés, le convertisseur comprenant en outre un dispositif de commande tel que défini précédemment.

## BREVE DESCRIPTION DES FIGURES

La [figure 1] est un schéma d'un convertisseur à capacité flottante en mode élévateur de tension (Mode Boost) avec une source de tension en sortie.

La [figure 2] est un schéma d'un convertisseur à capacité flottante en mode élévateur de tension (Mode Boost) avec une charge en sortie.

La [figure 3] est un schéma d'un convertisseur à capacité flottante en mode abaisseur de tension (Mode Buck) avec une source de tension en sortie.

La [figure 4] est un schéma d'un convertisseur à capacité flottante en mode abaisseur de tension (Mode Buck) avec une charge résistive en sortie.

La [figure 5] est un graphique des signaux de courant dans l'inductance et de signal de porte d'un dispositif selon l'état de la technique.

La [figure 6] est un schéma d'un convertisseur à capacité flottante en mode élévateur de tension (Mode Boost).

La [figure 7] est un schéma montrant les modes de conduction du courant d'entrée $i_L$.

La [figure 8] est un schéma de régulation du courant d'entrée $i_L$ en mode de conduction continue.

La [figure 9] est un schéma représentatif des signaux de commande en mode de conduction discontinue.

La [figure 10] est un schéma de régulation du courant d'entrée pour les deux modes de régulation continu et discontinu.

La [figure 11] est un schéma de régulation de la tension de sortie $v_{out}$ en mode de conduction continue.

La [figure 12] est un schéma de régulation de la tension de sortie pour les deux modes de régulation continu et discontinu.

La [figure 13] représente des chronogrammes pour la génération du signal $G_{1DCM}$.

La [figure 14] représente un résultat de simulation en mode de conduction discontinue pour un mode élévateur de tension (Boost).

La [figure 15] représente un résultat de simulation des pertes en mode de conduction discontinue pour un mode élévateur de tension (Boost).

**DESCRIPTION EN REFERENCE AUX FIGURES**

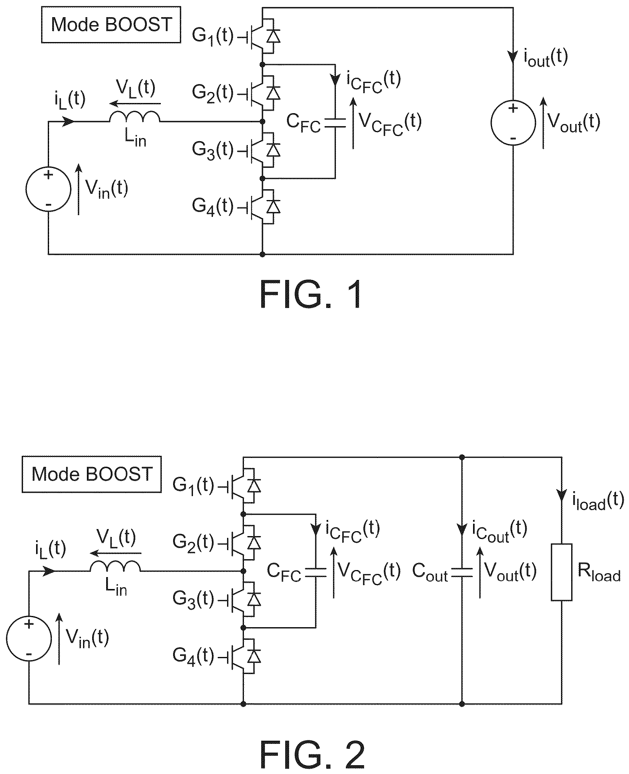

Le procédé et le dispositif selon l'invention peut s'appliquer notamment à 4 variantes de la topologie de convertisseur à capacité flottante telles que représentées sur les figures 1 à 4. En particulier :

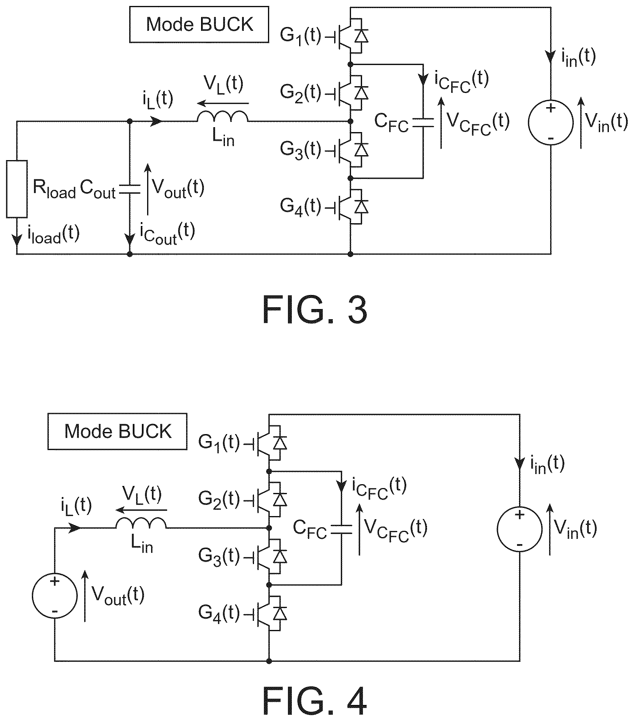

- Un convertisseur à capacité flottante en mode élévateur de tension (mode Boost) avec une source de tension en sortie comme représenté sur la figure 1 ;
- Un convertisseur à capacité flottante en mode élévateur de tension (mode Boost) avec une charge en sortie comme représenté sur la figure 2 ;
- Un convertisseur à capacité flottante en mode abaisseur de tension (mode Buck) avec une charge en sortie comme représenté sur la figure 3 ;
- Un convertisseur à capacité flottante en mode abaisseur de tension (mode Buck) avec une source de tension en sortie comme représenté sur la figure 4 ;

**Présentation de la topologie à capacité flottante en mode élévateur de tension (Boost)**

Un convertisseur à capacité flottante est présenté ci-dessous en mode élévateur de tension (Boost). L'invention peut être appliquée également pour le mode abaisseur de tension (Buck). En mode Boost, les signaux des transistors $S_1$ et $S_2$ sont modifiés tandis qu'en mode Buck, ce sont les signaux des transistors $S_3$ et $S_4$ qui le sont.

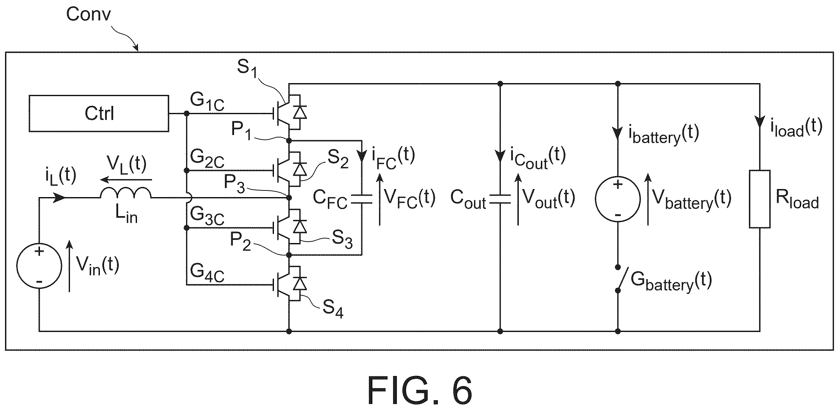

Le schéma du convertisseur *Conv* est présenté sur la Figure 6.

Le convertisseur Conv multi-niveau à capacité flottante comprend une première paire d'interrupteurs commandés $S_1$, $S_4$ et une deuxième paire d'interrupteurs commandés $S_2$, $S_3$. Les interrupteurs commandés $S_1$, $S_4$ de la première paire d'interrupteurs commandés $S_1$, $S_4$ sont disposés autour des interrupteurs commandés $S_2$, $S_3$ de la deuxième paire d'interrupteurs commandés $S_2$, $S_3$. Une capacité flottante $C_{FC}$ de tension $V_{FC}$ est connectée d'une part à un premier point $P_1$ disposé entre un premier interrupteur commandé $S_1$ de la première paire d'interrupteurs commandés $S_1$, $S_4$ et un premier interrupteur commandé $S_2$ de la deuxième paire d'interrupteurs commandés $S_2$, $S_3$ et d'autre part à un deuxième point $P_2$ disposé entre un deuxième interrupteur commandé $S_3$ de la première paire d'interrupteurs commandés $S_1$, $S_4$ et un deuxième interrupteur commandé $S_3$ de la deuxième paire d'interrupteurs commandés $S_2$, $S_3$,

Le convertisseur Conv comprend une inductance d'entrée $L_{in}$, qui est connectée à un point P3 disposé entre les 2 interrupteurs commandés de la deuxième paire d'interrupteurs commandés.

Dans le mode de réalisation représenté, les interrupteurs commandés sont constitués par des transistors ($S_1$, $S_4$) et ($S_2$, $S_3$). Chaque transistor est contrôlé par un signal de commande, respectivement ($G_1$, $G_4$) et ($G_2$, $G_3$).

L'entrée du convertisseur *Conv* est alimentée par une tension d'entrée $V_{in}$. Le courant $iL$ traverse l'inductance d'entrée $L_{in}$. La sortie du convertisseur est composée d'un condensateur de sortie $C_{out}$ ainsi qu'une charge $R_{load}$. Une source de tension (batterie, par exemple) peut être branchée sur le bus de sortie $V_{out}$. Dans les cas où cette source est connectée ($G_{battery}(t)=1$), le convertisseur régule le courant d'entrée $i_L(t)$. Si cette source n'est pas connectée ($G_{battery}(t)=0$), le convertisseur régule la tension de sortie $V_{out}(t)$ aux bornes de la charge $R_{load}$. Dans les deux cas, le convertisseur régule également la tension $v_{FC}$ du condensateur flottant $C_{FC}$. La tension $v_{FC}$ est régulée, en permanence, à la moitié de la tension $v_{out}$.

**Mode de conduction continue et discontinue**

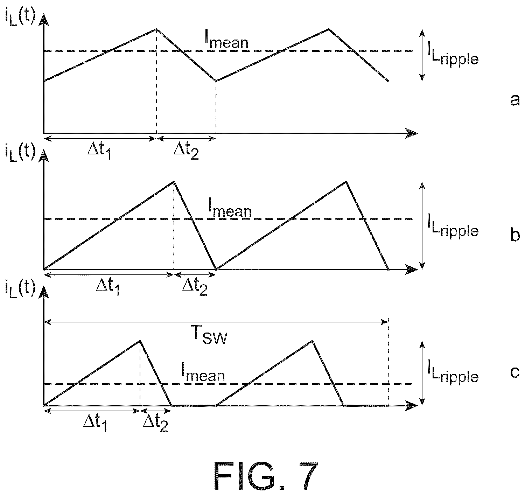

Il existe deux modes de conductions pour le fonctionnement du convertisseur comme cela est représenté sur la figure 7 : le mode de conduction représenté sur la courbe du haut (a) et le mode de conduction discontinue représentés sur la courbe du bas (c). Le cas limite représenté sur la courbe du milieu (b) correspond à une conduction continue limite.

Dans le mode de conduction continue, le courant d'entrée $i_L$ ne s'annule pas sur une période de découpage. La valeur moyenne $I_{mean}$ du courant d'entrée $i_L$ est supérieure à la moitié de l'amplitude d'oscillation $I_{Lripple}$. La somme de la phase de montée du courant et de baisse du courant dans une période est égale à la moitié de la période du courant d'entrée :

$$I_{mean} > I_{Lripple}/2$$

$$\Delta t_1 + \Delta t_1 = T_{sw/2}$$

Dans le mode de conduction discontinue, le courant d'entrée $i_L$ passe par 0 et peut devenir négatif s'il n'est pas bloqué. La valeur moyenne $I_{mean}$ du courant d'entrée $i_L$ est inférieure à la moitié de l'amplitude d'oscillation $I_{Lripple}$. La somme de la phase de montée du courant et de baisse du courant dans une période est inférieure à la moitié de la période du courant d'entrée :

$$I_{mean} < I_{Lripple}/2$$

$$\Delta t_1 + \Delta t_1 < T_{sw/2}$$

Dans le mode de conduction limite, La valeur moyenne $I_{mean}$ du courant d'entrée $i_L$ est supérieure à la moitié de l'amplitude d'oscillation $I_{Lripple}$. La somme de la phase de montée du courant et de baisse du courant dans une période est égale à la moitié de la période du courant d'entrée :

$$I_{mean} = I_{Lripple}/2$$

$$\Delta t_1 + \Delta t_1 = T_{sw/2}$$

En mode de conduction discontinue, un procédé de commande simple des transistors consiste à couper les commandes des transistors $S_1$ et $S_2$. Ces derniers se comportent alors comme des diodes et lorsque le courant descend à 0 A, il ne devient pas négatif et reste bloqué. Cette méthode à l'inconvénient d'imposer d'importantes pertes au convertisseur, car lorsque le courant est positif et passe à travers les diodes de $S_1$ et $S_2$, la tension inverse aux bornes de ces interrupteurs peut atteindre jusqu'à 5V (avec une tension de grille pilotée en -3V). L'objectif de l'invention est de couper le transistor au moment où il passe à 0 A et de l'activer lorsque le courant est positif. Ainsi, la tension inverse n'est plus présente et les pertes sont fortement réduites.

**Régulation du courant d'entrée - Mode de conduction continue**

Avant de présenter l'invention sur le contrôle en mode discontinue, le procédé de régulation en mode continu est d'abord détaillé ci-dessous, ce procédé étant mis en œuvre par un dispositif de commande Ctrl compris dans le convertisseur Conv.

Dans le cas d'un mode de conduction continue du convertisseur, le courant d'entrée $i_L$ ne s'annule pas sur une période de découpage $T_{sw}$.

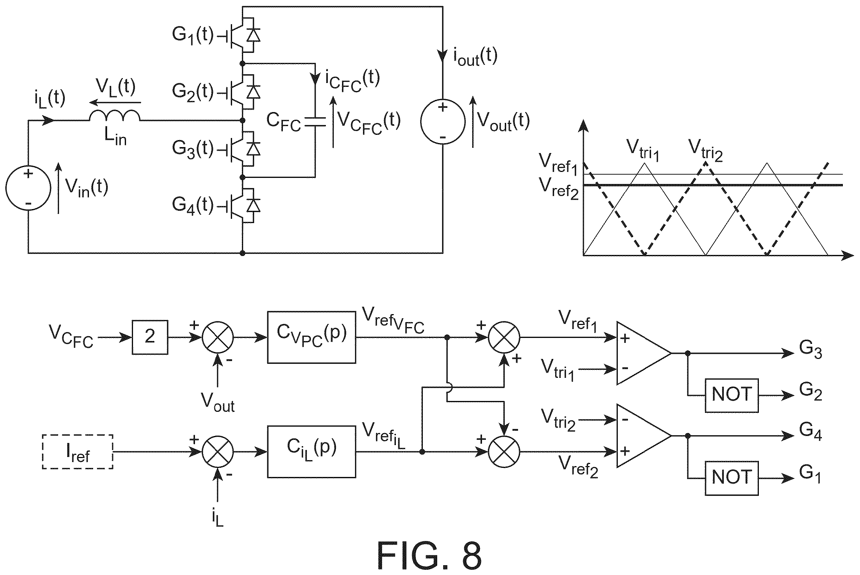

Comme cela est représenté sur la figure 8, la détermination de signaux de commande primaire $G_{1P}$, $G_{2P}$ $G_{3P}$ $G_{4P}$ pour les interrupteurs est réalisée en utilisant deux boucles de boucle de régulation en parallèle.

La première boucle asservit la tension $v_{FC}$ du condensateur flottant $C_{FC}$ à la moitié de la tension de sortie $V_{out}$ à l'aide du correcteur $C_{vFC}(p)$. La seconde boucle asservit le courant d'entrée $i_L$ à la référence de courant $I_{ref}$ grâce à un second correcteur $C_{iL}(p)$. Les sorties $v_{refvFC}$ et $v_{refiL}$ permettent de déterminer les signaux de références $V_{ref1}$ et $V_{ref2}$ qui sont comparés à deux porteuses triangulaires $V_{tri}$ et $V_{tri2}$ :

$$\begin{cases} V_{ref_1} = v_{ref_{i_L}} + v_{ref_{v_{FC}}} \\ V_{ref_2} = v_{ref_{i_L}} - v_{ref_{v_{FC}}} \end{cases}$$

Le signal $V_{tri1}$ est un signal triangulaire de fréquence $f_{sw}$ et le signal $V_{tri2}$ est un signal triangulaire déphasé de 180° par rapport au signal $V_{tri1}$. Le signal $V_{rer1}$ (respectivement $V_{ref2}$) est comparé au signal $V_{tri1}$ (respectivement $V_{tri2}$) pour générer les ordres de commandes de $G_3$ et $G_2$ (respectivement $G_4$ et $G_1$).

**Régulation du courant d'entrée - Mode de conduction discontinue**

L'objectif recherché de la commande en mode de conduction discontinue est de couper les commandes de $S_1$ et $S_2$ (respectivement $G_1$ et $G_2$) lorsque le courant passe par 0.

Ainsi, le procédé de commande du convertisseur en mode de conduction discontinu du convertisseur Conv comprenant les étapes suivantes.

Le procédé de commande comprend une première étape de détermination de signaux de commande primaire $G_{1p}$, $G_{2p}$, $G_{3p}$, $G_{4p}$, correspondant aux signaux de commande en mode de conduction continu du convertisseur Conv pour les interrupteurs commandés $S_1$, $S_2$, $S_3$, $S_4$, en utilisant les boucles de régulations décrites précédemment.

Le procédé de commande comprend une deuxième étape de détermination d'un signal de commande secondaire $G_{1CDM}$, $G_{2CDM}$ pour le premier interrupteur $S_1$ commandé de la première paire d'interrupteurs commandés $S_1$, $S_4$ et le premier interrupteur $S_2$ de la seconde paire d'interrupteurs commandés déterminés de façon à changer de valeur en lien avec le passage à zéro du courant $i_{S1}$, $i_{S2}$ respectivement dans l'interrupteur commandé $S_1$ ou $S_2$.

Le procédé de commande comprend ensuite une étape de combinaison entre le signal de commande primaire $G_{1p}$, $G_{2P}$ et le signal de commande secondaire $G_{1DCM}$, $G_{2DCM}$ pour le de façon à obtenir un signal de commande composite $G_{1C}$, $G_{2C}$ pour le premier interrupteur $S_1$ commandé de la première paire d'interrupteurs commandés $S_1, S_4$ et le premier interrupteur $S_2$ de la seconde paire d'interrupteurs commandés. Les signaux de commande restent inchangés par rapport au mode continu pour les deuxièmes interrupteurs commandés de chaque paire par rapport au mode de conduction continu. La combinaison réalisée entre de signal de commande primaire $G_1$ et le signal de commande secondaire $G_{1DCM}$ est une opération logique ET

Le procédé comprend enfin une étape de commande des interrupteurs commandés $S_1$, $S_2$ sur la base du signal de commande composite $G_{1C}$. Les interrupteurs commandés $S_3$ et $S_4$ sont commandés avec un signal de commande correspondant à la même commande qu'en mode continu.

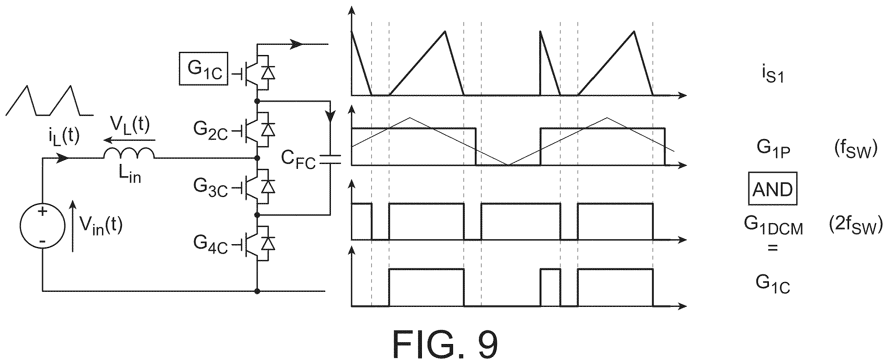

La Figure 9 présente les signaux de commandes pour le premier interrupteur commandé $S_1$ de la première paire d'interrupteur en mode de conduction discontinue pour le transistor $S_1$. La première courbe en partant du haut représente le courant dans le transistor $S_1$ à la fréquence $2*f_{sw}$. La deuxième courbe représente le signal PWM $G_{1P}$ à la fréquence de commutation $f_{sw}$. La troisième courbe représente le signal de commande $G_{1CDM}$ que l'on souhaite appliquer sur le transistor $S_1$ afin de conduire lorsque le courant est positif et d'ouvrir ce dernier lorsque le courant passe par 0. L'invention consiste à générer le signal correspondant à la troisième courbe, appelé $G_{1DCM}$, à la fréquence $2*f_{sw}$. Un ET logique va être appliqué entre le signal représenté sur la troisième courbe $G_{1DCM}$ et le signal représenté sur la deuxième courbe $G_{1P}$ afin de générer le signal souhaité représenté sur la quatrième courbe $G_{1C}$.

Le procédé de commande pour $S_2$ est analogue. Un autre signal $G_{2DCM}$ est généré. Cette méthode présente l'avantage :

- d'être simple à mettre en œuvre : le signal $G_{1P}$ est déjà présent dans la régulation du convertisseur en mode de conduction continue et le signal $G_{1DCM}$ est un simple signal à modulation de largeur d'impulsion (PWM) facile à générer. Il en est de même pour $S_2$ et $G_{2DCM}$.
- de ne nécessiter qu'un composant (à très bas coût) supplémentaire : un boîtier avec deux portes ET logiques (une pour le signal $S_1$ et une pour le signal $S_2$).
- de conserver la fréquence $2*f_{sw}$, du courant d'entrée. Ainsi, le dimensionnement de l'inductance reste identique par rapport à un fonctionnement en mode de conduction continue.
- de ne pas introduire de pertes supplémentaires sur $S_1$, car le signal $G_{1DCM}$ vient couper le transistor au moment du passage par zéro du courant (ZCS : Zero Current Switching). Il en est de même pour $S_2$ et $G_{2DCM}$.
- de conserver la méthode de régulation du mode de conduction continue. En effet, les signaux $G_{1P}$ et $G_{2P}$ sont générés par les deux boucles de régulation (cf Figure 8) et ils permettent la régulation du courant d'entrée.

La génération du signal $G_{1DCM}$ dépend du point de fonctionnement du convertisseur ($V_{in}$, $V_{out}$, $I_{in}$), de l'inductance d'entrée $L_{in}$ ainsi que de la fréquence de commutation $f_{sw}$. Le détail des équations permettant de générer ce signal est présenté ci-après.

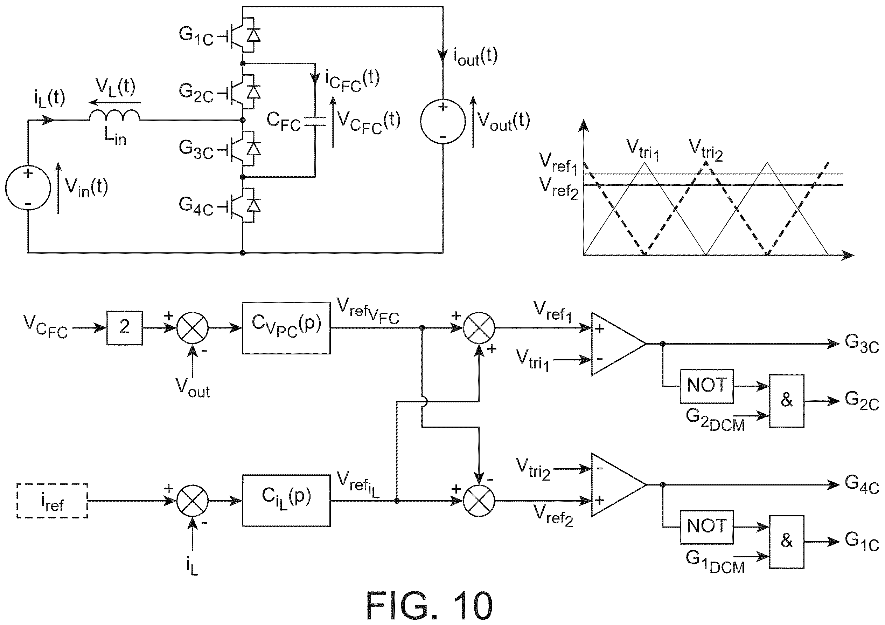

Ainsi, le schéma modifié de régulation du courant d'entrée $i_L$ du convertisseur pour les deux modes de conduction (continue et discontinue) est présenté sur la Figure 10. En mode de conduction continue, les signaux $G_{1DCM}$ et $G_{2DCM}$ sont tous les deux à 1. La régulation du convertisseur se fait par la méthode classique avec deux boucles de régulation pour contrôler le courant d'entrée et la tension du condensateur flottant. En mode de conduction discontinue, les signaux PWM $G_{1DCM}$ et $G_{2DCM}$ sont générés afin de garantir le fonctionnement avec un minimum de pertes. Ainsi, les transistors $S_1$ et $S_2$ sont fermés lorsque le courant est positif et commutés lorsque le courant devient nul.

L'invention permet d'utiliser des organes de pilotages à bas coût, comme par exemple un microcontrôleur simple. Il est toutefois également possible d'utiliser un FPGA pour générer cette commande. Certains des avantages sont conservés, notamment la simplicité et fréquence de commutation du courant. Par ailleurs, en cas d'utilisation d'un FPGA, il est possible d'intégrer directement les deux portes logiques ET dans le FPGA. Cela permet de supprimer l'ajout d'un composant extérieur.

**Régulation de la tension de sortie - Mode de conduction continue**

L'avantage du procédé présenté ci-dessus est qu'il reste fonctionnel quel que soit le mode de régulation, sur le courant d'entrée ou la tension de sortie. Par exemple, le procédé peut être utilisé pour la conversion de tension d'une pile à combustible ($V_{in}$=320 V- 520 V) vers une batterie et un onduleur moteur branchés en parallèle ($V_{out}$=685 V-915 V). Ainsi, en fonctionnement normal, le convertisseur régule le courant d'entrée du convertisseur, en mode de conduction continue ou discontinue, et la tension de sortie est maintenue par la batterie. En cas de défaut sur cette dernière, celle-ci se déconnecte du bus DC de sortie et le convertisseur régule alors directement la tension de sortie $V_{out}$, en mode de conduction continue ou discontinue, et fournit la puissance pour l'onduleur moteur.

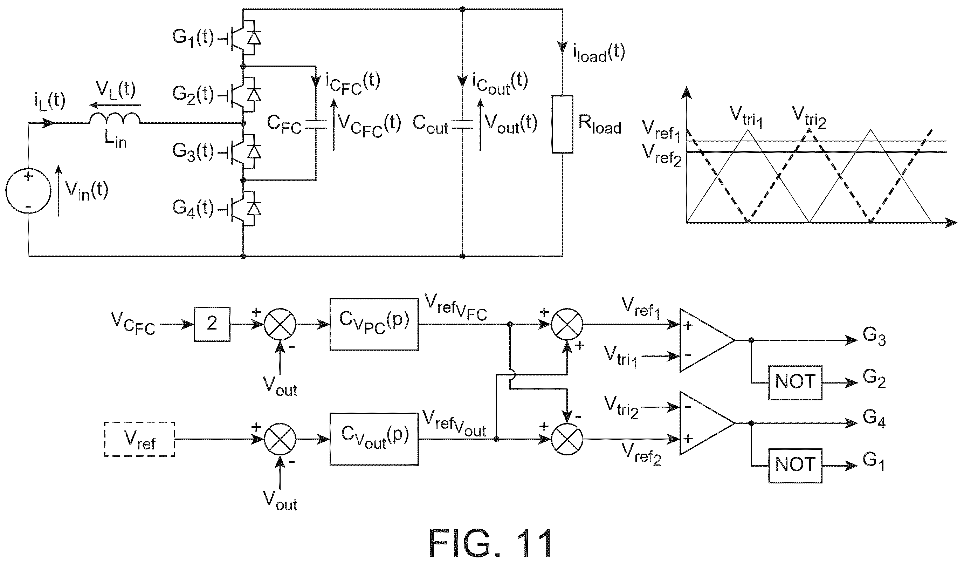

En mode de régulation de la tension de sortie $V_{out}$, le schéma de régulation adopté pour le convertisseur est celui présenté sur la Figure 11. Ce schéma comporte deux boucles de régulation en parallèle. La première boucle asservie la tension $v_{FC}$ du condensateur flottant $_{CFC}$ à la moitié de la tension de sortie $V_{out}$ à l'aide du correcteur $C_{vFC}$ (p). La seconde boucle asservit la tension de sortie $V_{out}$ à la référence de tension $V_{ref}$ grâce à un second correcteur Cvout (p). Les sorties $v_{refvFC}$ et $v_{refvout}$ permettent de déterminer les signaux de références $V_{ref1}$ et $V_{ref2}$ qui sont comparés aux porteuses triangulaires $V_{tri1}$ et $V_{tri2}$ :

$$\begin{cases} V_{ref_1} = v_{ref_{v_{out}}} + v_{ref_{v_{FC}}} \\ V_{ref_2} = v_{ref_{v_{out}}} - v_{ref_{v_{FC}}} \end{cases}$$

Le signal $V_{tri1}$ est un signal triangulaire de fréquence $f_{sw}$ et le signal $V_{tri2}$ est un signal triangulaire déphasé de 180° par rapport au signal $V_{tri1}$. Le signal $V_{ref1}$ (respectivement $V_{ref2}$) est comparé au signal $V_{tri1}$ (respectivement $V_{tri2}$) pour générer les ordres de commandes de $G_3$ et $G_2$ (respectivement $G_4$ et $G_1$).

Le principe de fonctionnement en mode de régulation de la tension de sortie $v_{out}$ est donc similaire à celui de la régulation du courant d'entrée présenté précédemment en référence à la figure 8. La mesure du courant $i_L$ est remplacée par la mesure de la tension de sortie $v_{out}$ et la référence de courant $i_{ref}$ est remplacée par la référence de tension $V_{ref}$. Pour finir, les coefficients du correcteur $C_{iL}$ (p) sont remplacés par ceux du correcteurs $C_{vout}$ (p).

## Régulation de la tension de sortie - Mode de conduction discontinue

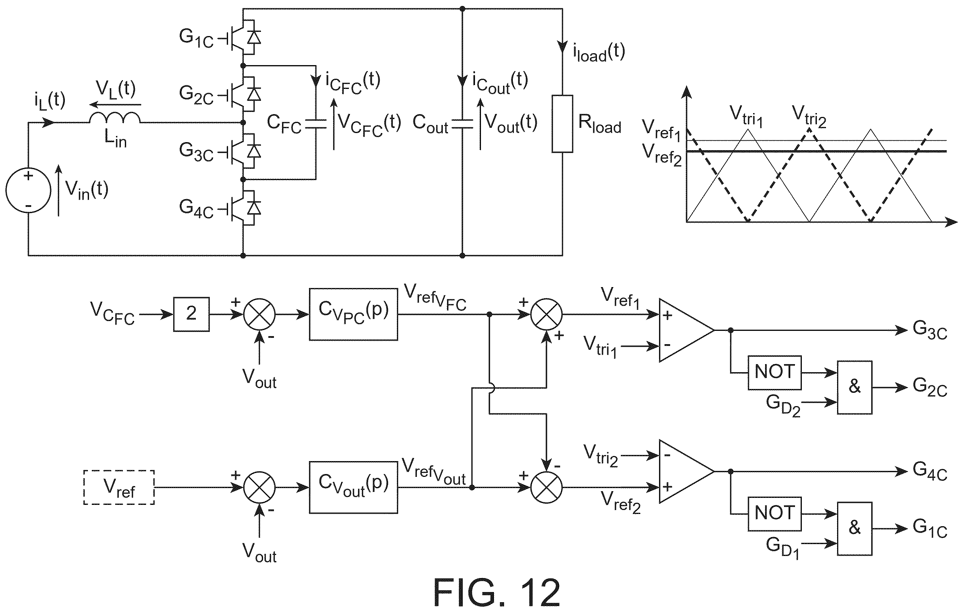

En mode de conduction continue, le schéma de régulation du courant d'entrée $i_L$ est très similaire au schéma de régulation de la tension de sortie $v_{out}$. Ainsi, en mode de conduction discontinue, ces deux schémas sont également très similaires. Le procédé selon l'invention permet de contrôler le convertisseur dans les modes buck ou boost, conduction continue ou discontinue, régulation du courant d'entrée ou de la tension de sortie. Le schéma modifié de régulation de la tension de sortie $v_{out}$ du convertisseur pour les deux modes de conduction, continue et discontinue est présenté sur la figure 12.

## Equations de générations des signaux $G_{1DCM}$ et $G_{2DCM}$

Le signal $G_{1DCM}$ est référencé à partir du signal $G_{1P}$. Ce dernier a une fréquence double, égale à $2*f_{sw}$ par rapport à la fréquence $f_{sw}$ du signal $G_{1P}$. Le déphasage $\Phi_{DCM}$ entre $G_{1DCM}$ et le signal $G_{1P}$ ou le signal (ou valeur) de porteuse $Vtri2$ du signal $G_{1P}$ ainsi que le rapport cyclique $\alpha_{DCM}$ de $G_{1DCM}$ sont déterminés en fonction des paramètres du convertisseur comme cela est décrit ci-dessous.

En particulier, le déphasage $\Phi_{DCM}$ est déterminé en fonction de la période du signal de commande primaire $T_{sw}$, de la valeur moyenne de l'intensité en entrée $I_{mean}$, de la tension d'entrée $V_{in}$ et de la tension de sortie $V_{out}$, de l'impédance d'entrée $L_{in}$ et d'une tension de référence $V_{ref1, Vref2}$.

De façon similaire, le signal de commande secondaire présente un rapport cyclique $\alpha_{DCM}$ déterminé en fonction de la période du signal de commande primaire $T_{sw}$, de la valeur moyenne de l'intensité en entrée $I_{mean}$, de la tension d'entrée $V_{in}$ et de la tension de sortie $V_{out}$, et de l'impédance d'entrée $L_{in}$.

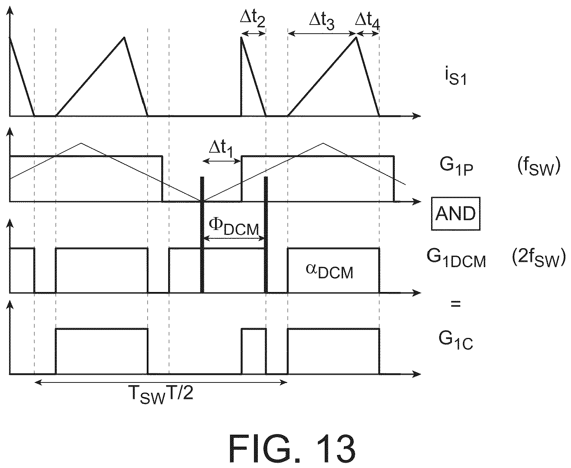

La remise à 0 du signal $G_{1DCM}$ s'effectue au moment où le courant passe par 0. Ainsi, il est possible de calculer cet instant $\Delta t_2$ à partir de l'instant de commutation du transistor. Cet instant de commutation du transistor $\Delta t_1$ peut également être déterminé à partir du passage à 0 du signal triangulaire de référence, représenté en pointillé sur la Figure 13. Ainsi :

$$\Phi_{DCM} = \Delta t_1 + \Delta t_2$$

En mode élévateur de tension (Boost) :

$$\Delta t_1 = V_{ref_1} * \frac{T_{sw}}{2}$$

$$\Delta t_2 = I_{L_{ripple}} * \frac{L_{in}}{V_{out} - V_{in}}$$

Avec :

$$I_{L_{ripple}} = \sqrt{\frac{I_{mean} \cdot T_{sw} \cdot (V_{out} - V_{in}) \cdot (2V_{in} - V_{out})}{V_{out} \cdot L_{in}}}$$

Ainsi :

$$\Phi_{DCM} = V_{ref_1} * \frac{T_{sw}}{2} + I_{L_{ripple}} * \frac{L_{in}}{V_{out} - V_{in}}$$

Le rapport cyclique $\alpha_{DCM}$ correspond au rapport entre le temps passé en conduction (courant positif) et la demi-période de commutation $T_{sw}/2$ :

$$\alpha_{DCM} = 1 - \frac{(\Delta t_3 + \Delta t_4)}{T_{sw}/2}$$

Avec :

$$\Delta t_3 = I_{L_{ripple}} * \left(\frac{L_{in}}{V_{out} - V_{in}}\right)$$

$$\Delta t_4 = I_{L_{ripple}} * \left(\frac{L_{in}}{V_{in} - 0.5 * V_{out}}\right)$$

Ainsi :

$$\alpha_{DCM} = \alpha_{DCM} = 1 - \frac{2}{T_{sw}} * I_{L_{ripple}} * \left(\frac{L_{in}}{V_{out} - V_{in}} + \frac{L_{in}}{V_{in} - 0.5 * V_{out}}\right)$$

Les paramètres du signal $G_{2DCM}$ sont calculés de façon similaire :

$$\Phi_{DCM} = V_{ref_2} * \frac{T_{sw}}{2} + I_{L_{ripple}} * \frac{L_{in}}{V_{out} - V_{in}}$$

$$\alpha_{DCM} = 1 - \frac{2}{T_{sw}} * I_{L_{ripple}} * \left(\frac{L_{in}}{V_{out} - V_{in}} + \frac{L_{in}}{V_{in} - 0.5 * V_{out}}\right)$$

**Equations en mode abaisseur de tension (mode Buck)**

En mode abaisseur de tension, les équations des paramètres de $G_{3DCM}$ et de $G_{4DCM}$ se calculent de façon similaire :

$$\Phi_{DCM}(G_{3DCM}) = \left(1 - V_{ref_1}\right) * \frac{T_{sw}}{2}$$

$$\Phi_{DCM}(G_{4DCM}) = \left(1 - V_{ref_2}\right) * \frac{T_{sw}}{2}$$

$$\alpha_{DCM} = 1 - \frac{T_{sw}}{2} * I_{L_{ripple}} * \frac{L_{in}}{V_{in} - 0.5 * V_{out}}$$

Par ailleurs, en mode abaisseur de tension, la formule de calcul de *ILripple* est différente et devient :

$$I_{L_{ripple}} = \sqrt{\frac{I_{mean} \cdot T_{sw} \cdot (V_{in} - V_{out}) \cdot (2V_{in} - V_{out})}{V_{out} \cdot L_{in}}}$$

**Gestion des incertitudes sur la valeur de l'inductance**

La modélisation présentée dans les sections précédentes suppose que la valeur de l'inductance soit parfaitement connue. En réalité, cette valeur est donnée, par les fabricants, avec une incertitude pouvant aller jusqu'à +/- 20%. Le risque de cette méthode serait d'avoir une inductance de valeur plus forte que celle qui est prévue dans le modèle. Ainsi, la coupure du courant se ferait après le passage par zéro du courant (courant négatif). Les pertes associées sont faibles, car le courant reste proche de 0. Néanmoins, cela peut déstabiliser la régulation du courant.

Ainsi, selon un mode de mise en oeuvre du procédé de commande, le signal de commande secondaire est déterminé en prenant en compte un paramètre d'erreur $\Delta_{error}$ destiné à réaliser une ouverture avant le passage à zéro du courant.

Le paramètre $\Delta_{error}$ a pour but d'assurer la coupure du courant avant que ce dernier ne devienne négatif. Ce paramètre doit être intégré dans l'équation de détermination du déphasage $\Phi_{DCM}$ et du rapport cyclique $\alpha_{DCM}$ afin de garder une symétrie. Le dimensionnement de ce $\Delta_{error}$ dépend du point de puissance. Il s'agit d'un compromis entre la minimisation des pertes (en commutant près du 0 de courant) et la stabilité de régulation. Un dimensionnement par simulation peut être réalisé. Ainsi, en mode élévateur de tension (Boost) :

$$\left| \Phi_{DCM} = \left( V_{ref\perp} - \Delta_{error} \right) * \frac{T_{sw}}{2} + I_{L_{ripple}} * \frac{L_{in}}{V_{out} - V_{in}} \right.$$

$$\alpha_{DCM} = 1 - \frac{2}{T_{sw}} * I_{L_{ripple}} * \left( \frac{L_{in}}{V_{out} - V_{in}} + \frac{L_{in}}{V_{in} - 0.5 * V_{out}} \right) - 2 * \boldsymbol{\Delta_{error}}$$

En mode abaisseur de tension :

$$\Phi_{DCM} = \left( 1 - V_{ref_1} + \Delta_{error} \right) * \frac{T_{sw}}{2}$$

$$\alpha_{DCM} = 1 - \frac{T_{sw}}{2} * I_{L_{ripple}} * \frac{L_{in}}{V_{in} - 0.5 * V_{out}} - 2 * \Delta_{error}$$

Selon un mode de réalisation, la valeur du paramètre d'erreur est comprise en 0 et 10% de la période du signal de commande primaire, et de préférence entre 1 et 5%.

**Simulation du principe**

Le principe de fonctionnement a été simulé sous MATLAB/SIMULINK avec les paramètres suivants :

Tension d'entrée : $V_{in}$=420 V
Puissance d'entrée : $P_{in}$=2 kW
Tension de sortie : $V_{out}$=650 V (Mode BOOST)
Inductance : $L_{in}$=30 µH
$S_1$ (GaN) : $V_f$(OFF)=-3V
Fréquence de commutation : $f_{sw}$=100 kHz

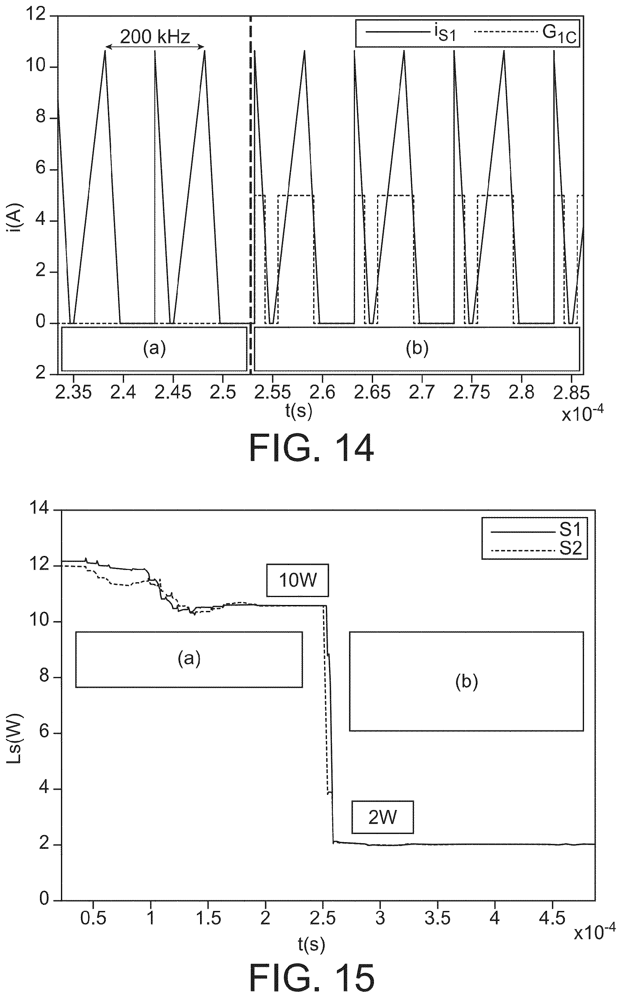

La Figure 14 présente les résultats en simulation de la génération du signal de grille $S_1$ lorsque le convertisseur est en mode de conduction discontinue (et Boost). Le passage du mode diode ($G_{1DCM}$=0) qui correspond à la phase (a) au mode actif qui correspond à la phase (b) peut se faire de façon dynamique. Ainsi, il est possible de stabiliser le système en mode diode (en quelques ms) puis d'activer le signal $G_{1DCM}$ afin de ne pas risquer de perturber un mode transitoire (variation forte du courant).

La Figure 15 présente les pertes Ls dans les transistors $S_1$ et $S_2$ au moment de l'activation des signaux $G_{1DCM}$ et $G_{2DCM}$ en passant de la phase (a) à la phase (b) décrits en référence à la figure 14. Dans ce cas d'application, les pertes sont réduites d'un facteur 5.

**Réalisation matérielle**

D'un point de vue matériel, le dispositif de commande Ctrl peut être réalisé de différentes façons. Selon un premier mode de réalisation, le dispositif de commande peut comprendre un microcontrôleur (ou DSP) et utiliser un périphérique Timer / PWM classique qui met en oeuvre les boucles de régulation décrites précédemment, ainsi que la détermination du signal de commande secondaire $G_{1DCM}$ et $G_{2DCM}$. Cette méthode est privilégiée, car elle est peu coûteuse. Dans ce cas, les portes logiques ET peuvent être rajoutées à l'extérieur du microcontrôleur.

Selon un deuxième mode de réalisation, le dispositif de commande peut comprendre un circuit électronique programmable de type FPGA. Dans ce cas, les portes ET sont directement intégrés dans le circuit électronique programmable.

Selon une autre possibilité, le dispositif de commande comprend des circuits analogiques, en particulier des amplificateurs opérationnels.

**Applications**

Cette invention est applicable par exemple à un convertisseur, par exemple un convertisseur automobile, notamment un convertisseur automobile de 25kW entre une pile à combustible (plage de tension : 320 V jusqu'à 520 V) et une batterie (plage de tension : 685 V jusqu'à 915 V). La topologie à capacité flottante permet de répondre à ce besoin en utilisant des transistors 650 V, car chaque transistor doit tenir au maximum la moitié de la tension de sortie (457.5 V). De plus, afin de réduire la valeur des éléments passifs, le convertisseur complet se compose de plusieurs modules, par exemple 4 ou 8, à capacité flottante dont les entrées/sorties sont en parallèles. Dans ce cadre, chaque convertisseur fonctionne en mode discontinue et il était donc nécessaire de trouver une solution permettant de piloter le convertisseur complet en maximisant le rendement sur toute la plage de puissance.

Au-delà de l'application automobile, cette invention est applicable dans n'importe quelle application associée à l'utilisation de la topologie à capacité flottante, par exemple des applications domestiques, ferroviaires, aéronautique, etc.

**Revendications**

1. Procédé de commande d'un convertisseur (Conv) multi-niveau à capacité flottante, le convertisseur (Conv) comprenant une inductance d'entrée ($L_{in}$), une première paire d'interrupteurs commandés ($S_1$, $S_4$) et une deuxième paire d'interrupteurs commandés ($S_2$, $S_3$), les interrupteurs commandés ($S_1$, $S_4$) de la première paire d'interrupteurs commandés ($S_1$, $S_4$) étant disposés autour des interrupteurs commandés ($S_2$, $S_3$) de la deuxième paires d'interrupteurs commandés ($S_2$, $S_3$), la capacité flottante ($C_{FC}$) étant connectée d'une part à un premier point ($P_1$) disposé entre un premier interrupteur commandé ($S_1$) de la première paire d'interrupteurs commandés ($S_1$, $S_4$) et un premier interrupteur commandé ($S_2$) de la deuxième paire d'interrupteurs commandés ($S_2$, $S_3$) et d'autre part à un deuxième point ($P_2$) disposé entre un deuxième interrupteur commandé ($S_3$) de la première paire d'interrupteurs commandés ($S_1$, $S_4$) et un deuxième interrupteur commandé ($S_3$) de la deuxième paire d'interrupteurs commandés ($S_2$, $S_3$), le convertisseur comprenant en outre un dispositif de commande (Ctrl) configuré pour commander au moins un des interrupteurs commandés ($S_1$, $S_2$, $S_3$, $S_4$) et pour mettre en œuvre le procédé de commande en mode de conduction discontinu du convertisseur (Conv), le procédé comprenant les étapes suivantes :

   - Détermination d'un signal de commande primaire ($G_{1P}$, $G_{2P}$, $G_{3P}$, $G_{4P}$) correspondant à signal de commande en mode de conduction continu du convertisseur (Conv) pour l'au moins un interrupteur commandé ($S_1$, $S_2$, $S_3$, $S_4$);
   - Détermination d'un signal de commande secondaire ($G_{1CDM}$, $G_{2CDM}$, $G_{3CDM}$, $G_{4CDM}$) déterminé de façon à changer de valeur en lien avec le passage à zéro du courant dans l'au moins un interrupteur commandé ($S_1$, $S_2$, $S_3$, $S_4$) ;
   - Combinaison entre le signal de commande primaire ($G_{1P}$, $G_{2P}$, $G_{3P}$, $G_{4P}$) et le signal de commande secondaire ($G_{1CDM}$, $G_{2CDM}$, $G_{3CDM}$, $G_{4CDM}$) de façon à obtenir un signal de commande composite ($G_{1C}$, $G_{2C}$, $G_{3C}$, $G_{4C}$) ;
   - Commande de l'au moins un interrupteur commandé ($S_1$, $S_2$, $S_3$, $S_4$) sur la base du signal de commande composite ($G_{1C}$, $G_{2C}$, $G_{3C}$, $G_{4C}$),

   dans lequel le signal de commande secondaire ($G_{1CDM}$, $G_{2CDM}$, $G_{3CDM}$, $G_{4CDM}$) est déterminé en fonction du point de fonctionnement ($V_{in}$, $V_{out}$, $I_{in}$) du convertisseur (Conv), d'une valeur de l'inductance d'entrée ($L_{in}$) et de la fréquence de commutation ($f_{sw}$).

2. Procédé selon la revendication 1, dans lequel la combinaison réalisée entre le signal de commande primaire ($G_{1P}$, $G_{2P}$, $G_{3P}$, $G_{4P}$) et le signal de commande secondaire ($G_{1CDM}$, $G_{2CDM}$, $G_{3CDM}$, $G_{4CDM}$) est une opération logique ET.

3. Procédé selon la revendication 2, dans lequel le signal de commande secondaire ($G_{1CDM}$, $G_{2CDM}$, $G_{3CDM}$, $G_{4CDM}$) est référencé par rapport au signal de commande primaire ($G_{1P}$, $G_{2P}$, $G_{3P}$, $G_{4P}$) et présente un déphasage ($\Phi_{DCM}$) par rapport audit signal de commande primaire ($G_{1P}$, $G_{2P}$, $G_{3P}$, $G_{4P}$) ou par rapport à une valeur de porteuse (Vtri) dudit signal de commande primaire ($G_{1P}$, $G_{2P}$, $G_{3P}$, $G_{4P}$).

4. Procédé selon la revendication 3, dans lequel le déphasage ($\Phi_{DCM}$) du signal du commande secondaire ($G_{1DCM}$, $G_{2DCM}$) par rapport au signal de commande primaire ($G_{1P}$, $G_{2P}$) ou par rapport à une valeur de porteuse (Vtri) dudit signal de commande primaire ($G_{1P}$, $G_{2P}$, $G_{3P}$, $G_{4P}$) est déterminé en fonction de la période du signal de commande primaire ($T_{sw}$), de la valeur moyenne de l'intensité en entrée ($I_{mean}$), de la tension d'entrée ($V_{in}$) et de la tension de sortie ($V_{out}$), de l'impédance d'entrée ($L_{in}$) et d'une tension de référence ($V_{ref1}$, $V_{ref2}$).

5. Procédé selon la revendication 4, dans lequel le déphasage est déterminé en mode élévateur de tension en prenant en compte la formule suivante :

$$\Phi_{DCM} = V_{ref} * \frac{T_{sw}}{2} + I_{Lripple} * \frac{L_{in}}{V_{out} - V_{in}}$$

Dans laquelle :

$\Phi_{DCM}$ est le déphasage du signal du commande secondaire ($G_{1DCM}$, $G_{2DCM}$) par rapport au signal de commande primaire ($G_{1P}$, $G_{2P}$) ou par rapport à une valeur de porteuse (Vtri) dudit signal de commande primaire ($G_{1P}$, $G_{2P}$, $G_{3P}$, $G_{4P}$) ;
$T_{sw}$ est la période du signal de commande primaire ($G_{1P}$, $G_{2P}$) ;
$V_{in}$ est la valeur instantanée de la tension d'entrée ;
$V_{out}$ est la valeur instantanée de la tension de sortie ;
$L_{in}$ est la valeur de l'impédance d'entrée ;
$V_{ref}$ est la valeur de la tension de référence ;
$I_{Lripple}$ étant défini par la formule :

$$I_{Lripple} = \sqrt{\frac{I_{mean}.T_{sw}.(V_{out} - V_{in}).(2V_{in} - V_{out})}{V_{out}.L_{in}}}$$

Dans laquelle en outre :
$I_{mean}$ est la valeur moyenne de l'intensité en entrée.

6. Procédé selon la revendication 3, dans lequel le déphasage ($\Phi_{DCM}$) du signal du commande secondaire ($G_{3DCM}$, $G_{4DCM}$) par rapport au signal de commande primaire ($G_{3P}$, $G_{4P}$) ou par rapport à une valeur de porteuse (Vtri) dudit signal de commande primaire ($G_{1P}$, $G_{2P}$, $G_{3P}$, $G_{4P}$) en mode abaisseur de tension est déterminé en fonction de la période du signal de commande primaire ($T_{sw}$), et d'une tension de référence ($V_{rer1}$, $V_{ref2}$).

7. Procédé selon la revendication 6, dans lequel le déphasage est déterminé en mode abaisseur de tension en prenant en compte la formule suivante :

$$\Phi_{DCM} = \left(1 - V_{ref}\right) * \frac{T_{sw}}{2}$$

Dans laquelle :

$\Phi_{DCM}$ est le déphasage du signal du commande secondaire ($G_{3DCM}$, $G_{4DCM}$) par rapport au signal de commande primaire ($G_{3P}$, $G_{4P}$) ;

$T_{sw}$ est la période du signal de commande primaire ($G_{3P}$, $G_{4P}$) ;

$V_{ref}$ est la valeur de la tension de référence ;

**8.** Procédé selon l'une quelconque des revendications précédentes, dans lequel le signal de commande secondaire présente un rapport cyclique ($\alpha_{DCM}$) déterminé en fonction de la période du signal de commande primaire ($T_{sw}$), de la valeur moyenne de l'intensité en entrée ($I_{mean}$), de la tension d'entrée ($V_{in}$) et de la tension de sortie ($V_{out}$), et de l'impédance d'entrée ($L_{in}$).

**9.** Procédé selon la revendication 8, dans lequel le rapport cyclique est déterminé en mode élévateur de tension en utilisant la formule :

$$\alpha_{DCM} = 1 - \frac{2}{T_{sw}} * I_{Lripple} * \left( \frac{L_{in}}{V_{out} - V_{in}} + \frac{L_{in}}{V_{in} - 0.5 * V_{out}} \right)$$

Dans laquelle :

$\alpha_{DCM}$ est le rapport cyclique du signal du commande secondaire ($G_{1DCM}$, $G_{2DCM}$) ;

$T_{sw}$ est la période du signal de commande primaire ($G_{1P}$, $G_{2P}$) ;

$V_{in}$ est la valeur de la tension d'entrée ;

$V_{out}$ est la valeur de la tension de sortie ;

$L_{in}$ est la valeur de l'impédance d'entrée ;

$I_{Lripple}$ étant défini par la formule :

$$I_{Lripple} = \sqrt{\frac{I_{mean}.T_{sw}.(V_{out} - V_{in}).(2V_{in} - V_{out})}{V_{out}.L_{in}}}$$

Dans laquelle en outre :

$I_{mean}$ est la valeur moyenne de l'intensité en entrée.

**10.** Procédé selon la revendication 8, dans lequel le rapport cyclique est déterminé en mode abaisseur de tension en utilisant la formule :

$$\alpha_{DCM} = 1 - \frac{T_{sw}}{2} * I_{Lripple} * \frac{L_{in}}{V_{in} - 0.5 * V_{out}}$$

Dans laquelle :

$\alpha_{DCM}$ est le rapport cyclique du signal du commande secondaire ($G_{3DCM}$, $G_{4DCM}$) ;

$T_{sw}$ est la période du signal de commande primaire ($G_{3P}$, $G_{4P}$) ;

$V_{in}$ est la valeur de la tension d'entrée ;

$V_{out}$ est la valeur de la tension de sortie ;

$L_{in}$ est la valeur de l'impédance d'entrée ;

$I_{Lripple}$ étant défini par la formule :

$$I_{Lripple} = \sqrt{\frac{I_{mean}.T_{sw}.(V_{in} - V_{out}).(2V_{in} - V_{out})}{V_{out}.L_{in}}}$$

Dans laquelle en outre :

$I_{mean}$ est la valeur moyenne de l'intensité en entrée.

**11.** Procédé selon l'une des revendications précédentes, dans lequel le signal de commande secondaire ($G_{1CDM}$, $G_{2CDM}$, $G_{3CDM}$, $G_{4CDM}$) est déterminé en prenant en compte un paramètre d'erreur ($\Delta_{error}$) destiné à réaliser une ouverture de l'au moins un interrupteur commandé ($S_1$, $S_2$, $S_3$, $S_4$) avant le passage à zéro du courant.

**12.** Procédé selon la revendication 11, dans lequel le déphasage est déterminé en mode élévateur de tension en prenant en compte la formule suivante :

$$\Phi_{DCM} = \left(V_{ref1} - \Delta_{error}\right) * \frac{T_{sw}}{2} + I_{Lripple} * \frac{L_{in}}{V_{out} - V_{in}}$$

Dans laquelle :

$\Phi_{DCM}$ est le déphasage du signal du commande secondaire ($G_{1DCM}$, $G_{2DCM}$) par rapport au signal de commande primaire ($G_{1P}$, $G_{2P}$) ou par rapport à une valeur de porteuse (Vtri) dudit signal de commande primaire ($G_{1P}$, $G_{2P}$, $G_{3P}$, $G_{4P}$) ;
$T_{sw}$ est la période du signal de commande primaire ($G_{1P}$, $G_{2P}$) ;
$V_{in}$ est la valeur instantanée de la tension d'entrée ;
$V_{out}$ est la valeur instantanée de la tension de sortie ;
$L_{in}$ est la valeur de l'impédance d'entrée ;
$V_{ref1}$ est la valeur de la tension de référence ;
$I_{Lripple}$ étant défini par la formule :

$$I_{Lripple} = \sqrt{\frac{I_{mean}.T_{sw}.(V_{out} - V_{in}).(2V_{in} - V_{out})}{V_{out}.L_{in}}}$$

Dans laquelle en outre :
$I_{mean}$ est la valeur moyenne de l'intensité en entrée.

**13.** Procédé selon l'une des revendications 11 ou 12, dans lequel le rapport cyclique est déterminé en mode élévateur de tension en prenant en compte la formule suivante :

$$\alpha_{DCM} = 1 - \frac{2}{T_{sw}} * I_{Lripple} * \left(\frac{L_{in}}{V_{out} - V_{in}} + \frac{L_{in}}{V_{in} - 0.5 * V_{out}}\right) - 2 * \Delta_{error}$$

Dans laquelle :

$\alpha_{DCM}$ est le rapport cyclique du signal du commande secondaire ($G_{1DCM}$) ;
$T_{sw}$ est la période du signal de commande primaire ($G_{1P}$) ;
$V_{in}$ est la valeur instantanée de la tension d'entrée ;
$V_{out}$ est la valeur instantanée de la tension de sortie ;
$L_{in}$ est la valeur de l'impédance d'entrée ;
$I_{Lripple}$ étant défini par la formule :

$$I_{Lripple} = \sqrt{\frac{I_{mean}.T_{sw}.(V_{out} - V_{in}).(2V_{in} - V_{out})}{V_{out}.L_{in}}}$$

Dans laquelle en outre :
$I_{mean}$ est la valeur moyenne de l'intensité en entrée.

**14.** Procédé selon la revendication 11, dans lequel le déphasage est déterminé en mode abaisseur de tension en prenant en compte la formule suivante :

$$\Phi_{DCM} = \left(1 - V_{ref_1} + \Delta_{error}\right) * \frac{T_{sw}}{2}$$

Dans laquelle :

$\Phi_{DCM}$ est le déphasage du signal du commande secondaire ($G_{1DCM}$, $G_{2DCM}$) par rapport au signal de commande primaire ($G_{1P}$, $G_{2P}$) ou par rapport à une valeur de porteuse (Vtri) dudit signal de commande primaire ($G_{1P}$, $G_{2P}$, $G_{3P}$, $G_{4P}$) ;

$T_{sw}$ est la période du signal de commande primaire ($G_{1P}$, $G_{2P}$) ;

$V_{in}$ est la valeur instantanée de la tension d'entrée ;

$V_{out}$ est la valeur instantanée de la tension de sortie ;

$L_{in}$ est la valeur de l'impédance d'entrée ;

$V_{ref1}$ est la valeur de la tension de référence ;

$I_{Lripple}$ étant défini par la formule :

$$I_{Lripple} = \sqrt{\frac{I_{mean}.T_{sw}.(V_{in} - V_{out}).(2V_{in} - V_{out})}{V_{out}.L_{in}}}$$

Dans laquelle en outre :

$I_{mean}$ est la valeur moyenne de l'intensité en entrée.

**15.** Procédé selon l'une des revendications 11 ou 14, dans lequel le rapport cyclique est déterminé en mode abaisseur de tension en prenant en compte la formule suivante :

$$\alpha_{DCM} = 1 - \frac{T_{sw}}{2} * I_{Lripple} * \frac{L_{in}}{V_{in} - 0.5 * V_{out}} - 2 * \Delta_{error}$$

Dans laquelle :

$\alpha_{DCM}$ est le rapport cyclique du signal du commande secondaire ($G_{1DCM}$) ;

$T_{sw}$ est la période du signal de commande primaire ($G_{1P}$) ;

$V_{in}$ est la valeur instantanée de la tension d'entrée ;

$V_{out}$ est la valeur instantanée de la tension de sortie ;

$L_{in}$ est la valeur de l'impédance d'entrée ;

$I_{Lripple}$ étant défini par la formule :

$$I_{Lripple} = \sqrt{\frac{I_{mean}.T_{sw}.(V_{in} - V_{out}).(2V_{in} - V_{out})}{V_{out}.L_{in}}}$$

Dans laquelle en outre :

$I_{mean}$ est la valeur moyenne de l'intensité en entrée.

**16.** Procédé selon l'une quelconque des revendications précédentes, dans lequel la détermination du signal de commande primaire ($G_{1P}$, $G_{2P}$, $G_{3P}$, $G_{4P}$) est réalisée en utilisant une boucle de régulation d'une tension de sortie ($V_{out}$) et/ou en fonction d'une tension (VCfc) aux bornes de la capacité flottante et d'une valeur de courant d'entrée ($I_L$) ou de tension d'entrée de référence ($V_{ref}$).

**17.** Procédé selon la revendication 14, dans lequel la boucle de régulation réalise une comparaison entre une valeur de tension d'entrée de référence ($V_{ref}$) et au moins une valeur de porteuse ($V_{tri}$).

**18.** Dispositif de commande (Ctrl) pour un convertisseur (Conv) multi-niveau à capacité flottante, le dispositif de commande étant agencé pour mettre en oeuvre un procédé selon l'une des revendications précédentes.

**19.** Convertisseur (Conv) multi-niveau à capacité flottante, le convertisseur (Conv) comprenant une première paire d'interrupteurs commandés ($S_1$, $S_4$) et une deuxième paire d'interrupteurs commandés ($S_2$, $S_3$), les interrupteurs commandés ($S_1$, $S_4$) de la première paire d'interrupteurs commandés ($S_1$, $S_4$) étant disposés autour des interrupteurs commandés ($S_2$, $S_3$) de la deuxième paires d'interrupteurs commandés ($S_2$, $S_3$), la capacité flottante ($C_{FC}$) étant connectée d'une part à un premier point ($P_1$) disposé entre un premier interrupteur commandé ($S_1$) de la première paire d'interrupteurs commandés ($S_1$, $S_4$) et un premier interrupteur commandé ($S_2$) de la deuxième paire d'interrupteurs commandés ($S_2$, $S_3$) et d'autre part à un deuxième point ($P_2$) disposé entre un deuxième interrupteur

commandé ($S_3$) de la première paire d'interrupteurs commandés ($S_1$, $S_4$) et un deuxième interrupteur commandé ($S_3$) de la deuxième paire d'interrupteurs commandés ($S_2$, $S_3$), le convertisseur comprenant en outre un dispositif de commande (Ctrl) selon la revendication 18.

FIG. 1

FIG. 2

FIG. 3

FIG. 4

FIG. 5

FIG. 6

FIG. 7

FIG. 8

FIG. 9

$i_{S1}$

$G_{1P}$   $(f_{SW})$

AND

$G_{1DCM}$   $(2f_{SW})$

=

$G_{1C}$

EP 4 746 270 A1

FIG. 10

FIG. 11

FIG. 12

EP 4 746 270 A1

FIG. 13

FIG. 14

FIG. 15

Europäisches
Patentamt

European
Patent Office

Office européen
des brevets

**RAPPORT DE RECHERCHE EUROPEENNE**

Numéro de la demande

**EP 25 21 6659**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | NAG KUMAR JOY ET AL: "Fully Soft-Switching Flying Capacitor Based Quasi-Resonant Boost Converter", 2023 IEEE APPLIED POWER ELECTRONICS CONFERENCE AND EXPOSITION (APEC), IEEE, 19 mars 2023 (2023-03-19), pages 919-925, XP034350557, DOI: 10.1109/APEC43580.2023.10131658 | 1-4,6,8, 11,16-19 | INV. H02M1/00 H02M3/158 H02M3/06 |
| A | * figures 1-4 * * page 919 - page 922 * ----- | 5,7,9, 10,12-15 | |
| A | NAG KUMAR JOY ET AL: "Review of Fully Soft-Switching Flying Capacitor Based Quasi-Resonant Converters", 2023 22ND INTERNATIONAL SYMPOSIUM ON POWER ELECTRONICS (EE), IEEE, vol. 1, 25 octobre 2023 (2023-10-25), pages 1-6, XP034492400, DOI: 10.1109/EE59906.2023.10346116 * figure 2 * * pages 1-4 * ----- | 1-19 | |
| | | | **DOMAINES TECHNIQUES RECHERCHES (IPC)** |
| A | NAG KUMAR JOY ET AL: "Fully Soft-Switching Flying Capacitor Based Quasi-Resonant Buck Converter", 2023 IEEE ENERGY CONVERSION CONGRESS AND EXPOSITION (ECCE), IEEE, 29 octobre 2023 (2023-10-29), pages 2182-2188, XP034508044, DOI: 10.1109/ECCE53617.2023.10362498 * figures 1-4 * * page 2182 - page 2186 * ----- | 1-19 | H02M |

Le présent rapport a été établi pour toutes les revendications

| Lieu de la recherche | Date d'achèvement de la recherche | Examinateur |
|---|---|---|
| La Haye | 27 février 2026 | Riehl, Philippe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................

& : membre de la même famille, document correspondant

EPO FORM 1503 03.82 (P04C02)